## Europäisches Patentamt

## European Patent Office

## Office européen des brevets

(19)

(11) Numéro de publication: **0 017 540**
**B1**

(12)

## FASCICULE DE BREVET EUROPEEN

(45) Date de publication du fascicule du brevet: **23.03.83**

(51) Int. Cl.³: **G 01 S 3/78, F 41 G 3/22**

(21) Numéro de dépôt: **80400363.0**

(22) Date de dépôt: **18.03.80**

(54) Dispositif optoélectrique de localisation de source lumineuse ponctuelle.

(30) Priorité: **06.04.79 FR 7908786**

(43) Date de publication de la demande:
**15.10.80 Bulletin 80/21**

(45) Mention de la délivrance du brevet:
**23.03.83 Bulletin 83/12**

(84) Etats contractants désignés:
**DE GB NL SE**

(56) Documents cités:
**FR - A - 2 356 152**
**GB - A - 1 520 154**
**US - A - 3 951 550**
**US - A - 4 018 532**

(73) Titulaire: **THOMSON-CSF**
**173, Boulevard Haussmann**
**F-75379 Paris Cedex 08 (FR)**

(72) Inventeur: **Reymond, Jean-Claude**
**"THOMSON-CSF" SCPI - 173, Bld Haussmann**
**F-75360 Paris Cedex 08 (FR)**
Inventeur: **Hidalgo, Jean-Luc**
**"THOMSON-CSF" SCPI - 173, Bld Haussmann**
**F-75360 Paris Cedex 08 (FR)**
Inventeur: **Skenderoff, Claude**
**"THOMSON-CSF" SCPI - 173, Bld Haussmann**
**F-75360 Paris Cedex 08 (FR)**

(74) Mandataire: **Trocellier, Roger et al,**
**THOMSON-CSF SCPI 173, Bld Haussmann**
**F-75379 Paris Cedex 08 (FR)**

Courier Press, Leamington Spa, England.

# Dispositif optoelectrique de localisation de source lumineuse ponctuelle

La présente invention concerne des perfectionnements aux dispositifs optoélectriques de localisation de source lumineuse permettant de déterminer la direction d'une source ponctuelle par rapport au dispositif, c'est-à-dire sa localisation angulaire, et qui s'appliquent notamment à la réalisation de systèmes de repérage de direction tels que des systèmes viseurs de casque.

Selon des techniques connues, par le brevet américain 3 951 550, un dispositif de ce genre comporte un cache optique à l'avant d'un boîtier dans le fond duquel sont disposés des réseaux linéaires d'éléments photosensibles dans un plan parallèle à celui du cache. Celui-ci est pourvu de zones transparentes sous forme de fentes linéaires pour délimiter le rayonnement provenant de la source selon au moins deux plans secants dont la droite d'intersection passe par la source émettrice. Chaque fente est associée avec une barrette détectrice de direction inclinée par rapport à celle de la fente, de préférence perpendiculairement à la fente. Ainsi les points d'intersection des plans avec les barrettes détectrices permettent de déterminer par le calcul la localisation angulaire ou direction de la source par rapport au dispositif. Des circuits de traitement des signaux détectés par les barrettes permettent d'identifier le range des éléments sensibilisés correspondants aux points d'intersection et des circuits de calcul annexes élaborent les données de dépointage de la source. Utilisé avec plusieurs sources ponctuelles liées à une structure mobile, par exemple le casque d'un pilote, les sources étant alimentées séparément et séquentiellement, le dispositif permet de calculer quasi-instanément la position spatiale des sources et consécutivement la direction d'un axe lié à la structure mobile, la direction de visée dans l'application à un viseur de casque.

Par un traitement électronique approprié il est possible d'éliminer ou de réduire fortement l'effet de bruit dû à un fond lumineux dans la mesure où il est uniforme ou lentement variable. Par contre, il s'avère pratiquement impossible d'éliminer le signal parasite détecté causé par le soleil éclairant directement un récepteur photosensible à travers une fente.

Un objet de l'invention est de réaliser un dispositif de localisation angulaire de source lumineuse ponctuelle remédiant à cet inconvénient en utilisant un dispositif à transparence variable et à commande électrique, de manière à obturer optiquement la plus grande partie de la fente et ne laisser transparent qu'une faible portion de celle-ci, sensiblement la partie utile de fente correspondant au rayonnement de la source parvenant au détecteur.

Les perfectionnements selon l'invention permettent ainsi d'accroître sensiblement le rapport signal à bruit en présence d'un fond lumineux et, comme on le verra ultérieurement dans l'application à un viseur de casque, la probabilité d'une réception directe du rayonnement solaire peut s'en trouver très réduite.

Suivant une caractéristique de l'invention, il est réalisé un dispositif optoélectrique de localisation de source lumineuse ponctuelle comportant: un cache optique pour ne laisser pénétrer le rayonnement de la source que selon des zones transparentes de forme déterminée et, dans un plan parallèle au cache, un montage de réseaux linéaires d'éléments photosensibles; des circuits de traitement des signaux détectés par les réseaux identifiant le range des éléments sensibilisés par le rayonnement transmis à travers le cache; et des moyens annexes de calcul de localisation de la source à partir des identifications de rang; et dans lequel des moyens obturateurs optoélectriques sont prévus pour opacifier les zones transparentes du cache exceptées les régions qui transmettent le rayonnement lumineux issu de la source sur les réseaux détecteurs, ces moyens comportant une pluralité d'élémentes obturateurs optiques à commande électrique et des moyens de sélection des éléments correspondant auxdites régions, commandés à partir de signaux élaborés par les moyens de calcul en fonction de la localisation angulaire de la source.

Les particularités et avantages de la présente invention apparaîtront dans la description qui suit donnée à titre d'exemple à l'aide des figures annexées qui représentent:

—la figure 1, un schéma simplifié d'un dispositif de localisation perfectionné conformément à l'invention;

—les figures 2 à 4, des schémas relatifs à un exemple de réalisation d'un dispositif obturateur optoélectrique utilisé selon l'invention;

—les figures 5 à 7, des schémas relatifs à des modes de fonctionnement d'un dispositif obturateur selon les figures 2 à 4;

—les figures 8 et 9, un diagramme d'un exemple de réalisation d'un circuit de commande du dispositif obturateur selon les figures 2 à 4 et un schéma relatif au fonctionnement; et

—la figure 10, un schéma relatif à une application à un système viseur de casque.

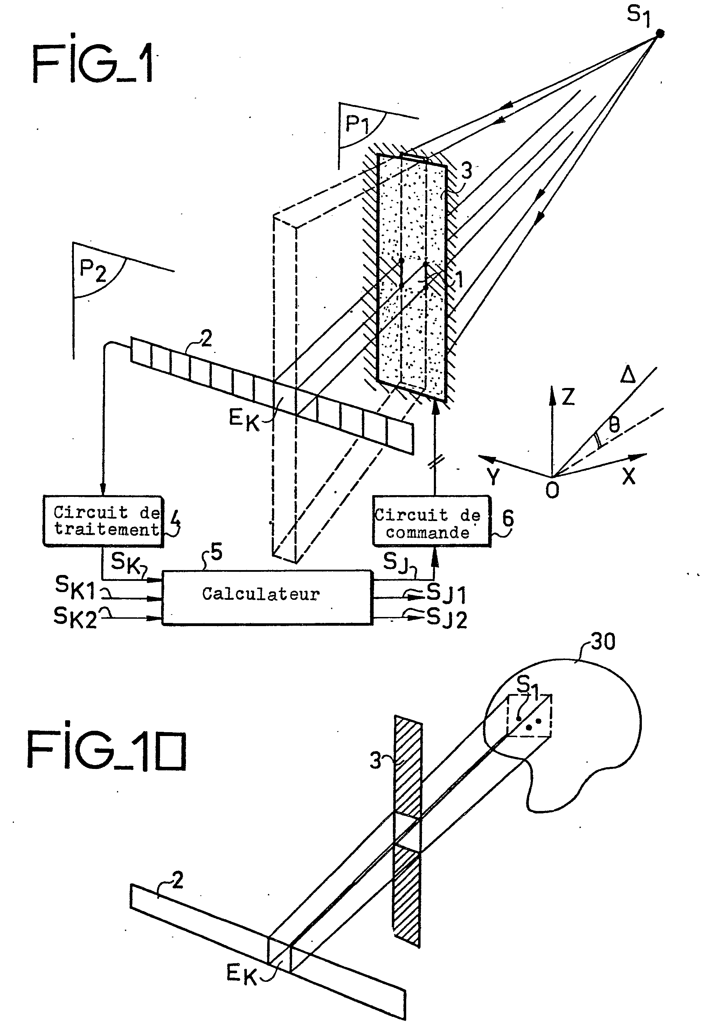

Sur le schéma simplifié de la figure 1 il a été représenté un seul groupement d'une fente linéaire 1 avec une barrette détectrice 2. Il est entendu que le dispositif de localisation, ou capteur, comporte plusieurs fentes, ou groupementes, pour déterminer au moins deux plans sécants passant par la source S1 à localiser. A chaque fente est associé selon l'invention un dispositif à transparence variable 3 commandé électriquement. Les signaux détectés par la barrette 2 consistant en une mosaïque linéaire de photodétecteurs, sont transmis au circuit de traitement 4 identifiant le rang des éléments sensibilisés, ici le range K de l'élément EK en supposant un seul élément sensibilisé à titre de simplification. L'information SK correspondante et celles SK1, SK2 provenant d'autres groupements ou fentes sont traitées ensuite par le calcul dans le circuit 5 pour déterminer la localisation angulaire, ou spatiale, de la source selon des techniques connues.

La fente et la barrette sont situées dans des plans P1, P2 parallèles et perpendiculaires à la direction X de référence; la barrette est orientée selon la direction Y et la fente selon la direction Z perpendiculaire, cette disposition n'étant pas à considérer comme limitative.

Conformément à la présente invention, les aménagements objet des perfectionnements consistent à équiper chaque fente du capteur d'un dispositif à transparence variable du type obturateur optoélectrique 3 commandé par un circuit 6 à partir de données SJ élaborées par les moyens de calcul annexes 5.

On peut montrer que l'énergie lumineuse E parvenant sur un élément détecteur EK est donnée sensiblement par l'expression

$$E = L \frac{Sd . Sf}{D^2}$$

où L est la luminance du fond observé à travers la fente, Sd la surface de l'élément EK, Sf la surface de la fente et D la distance entre la barrette et la fente. Il apparaît ainsi que la réduction du paramètre Sf dû au montage obturateur optoélectrique entraîne corrélativement une diminution importante de la luminance du fond. Par contre, le rayonnement utile issu de la source S1 à détecter et localiser est préservé en maintenant transparente une zone réduite de la fente correspondant sensiblement à la partie du champ englobant le rayonnement issu de la source S1 et parvenant sur la barrette 2 comme représenté sur la figure 1. Si l'on considère le plan XOY horizontal et Δ représentant la direction EK-S1 de la source calculée par le circuit 5 à partir des différents signaux SK, on voit que la zone qui doit être maintenue transparente est déterminée par ce groupement par la valeur angulaire de site $\theta$ présentée par la source. Cette valeur angulaire est calculée par le circuit 5 qui élabore des données SJ de commande correspondantes pour chacun des circuits de commande 6 d'obturateurs inclus dans le capteur.

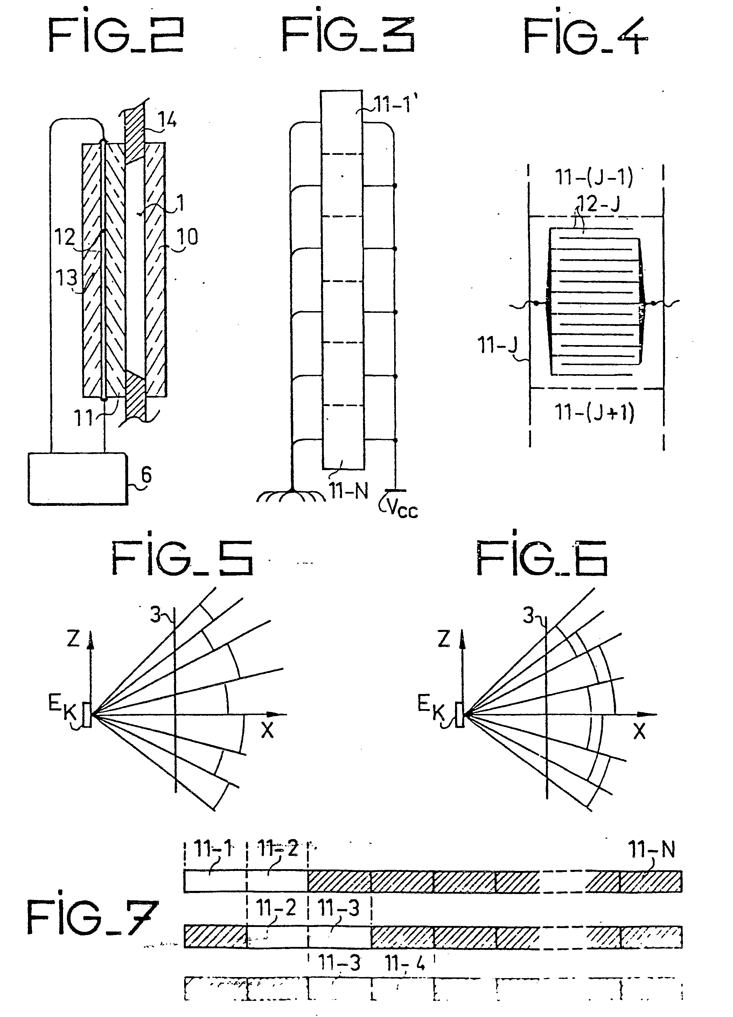

Un exemple de réalisation du dispositif obturateur optoélectrique est décrit maintenant à l'aide des figure 2 à 4. L'obturateur est du type utilisant une lame en céramique ferroélectrique réalisable avec le matériau titanate-zirconate de plomb et de lanthane dit PLZT selon une abréviation usuelle, et groupant de manière connue, un premier polariseur 10, une lame en céramique PLZT 11, un circuit d'électrodes interdigitées 12 dits circuits en peigne, et un deuxième polariseur 13. L'ensemble recouvre la zone de la fente 1 ménagée dans un support mécanique 14. La lame PLZT est divisée par duplication des circuits d'électrodes en une pluralité N d'éléments obturateurs juxtaposés selon la direction de la fente, 11-1 à 11-N, connectés chacun par une première sortie à un potentiel continu Vcc et par leur deuxième sortie au circuit de command 6. La sélection par le circuit 6 s'effectue par application de la tension d'alimentation sur le ou les éléments concernés pour les rendre transparents.

La figure 4 montre une réalisation d'un circuit d'électrodes interdigitées 12-J délimitant une zone élémentaire 11-J de la lame PLZT. Les N zones de la céramique PLZT peuvent être maintenues occultées ou rendues transparentes séparément. Le découpage en zones ou éléments successifs permet de simplifier la réalisation du circuit de commande.

La commande d'un seul élément 11-J à la fois correspond à couvrir le champ vu de la barrette par des secteures successifs comme représentés sur le schéma figure 5. Suivant un mode d'exploitation préféré, on commande deux éléments successifs à la fois de manière à obtenir des secteurs qui se chevauchent (Fig. 6) et éviter une ambiguïté soulevée dans le cas précédent lors du passage d'un secteur au suivant. La figure 7 illustre, à titre d'exemple, une commande d'éléments transparents par paires successives dans le temps en fonction d'un mouvement correspondant de la source lumineuse.

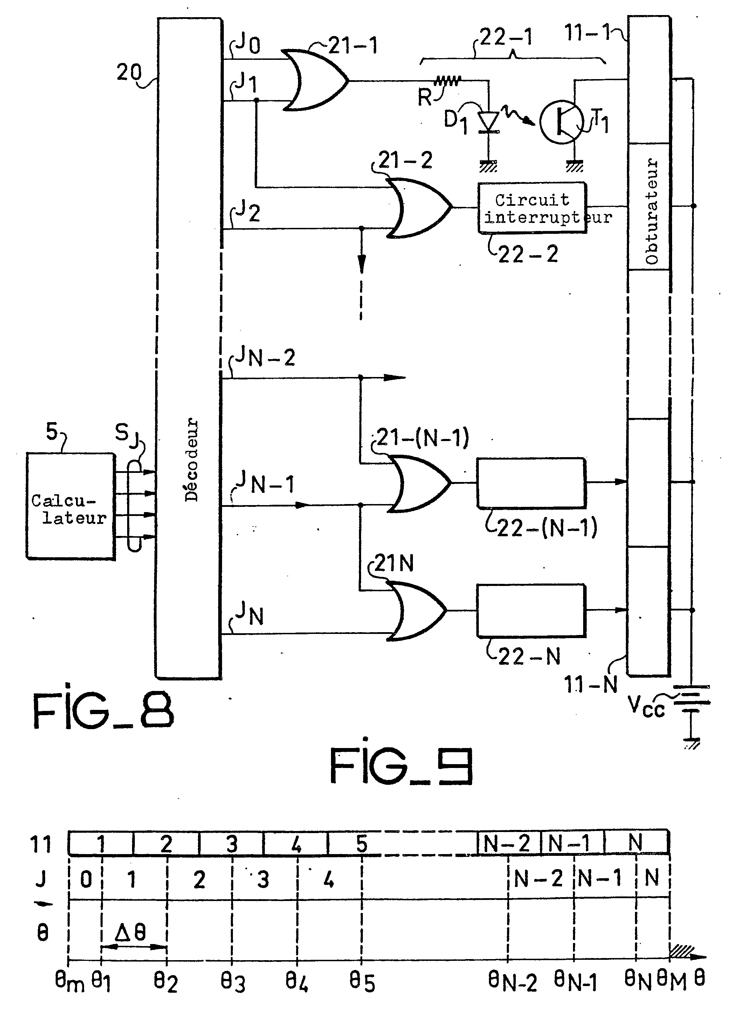

La figure 8 représente un exemple de réalisation du circuit de commande 6 dans le concept d'exploitation selon les figures 6 et 7. Il comporte un circuit décodeur 20 réalisé pour le décodage des données SJ élaborées par le calculateur. Ces données sont, par exemple, sorties sur 4 fils pour une information de 4 bits, soit N au plus égal à 16. Le décodeur comporte N+1 sorties JO à JN, connectées à des circuits OU 21-1 à 21-N, chaque circuit recevant deux sorties successives du décodeur. Les sorties de ces portes logiques alimentent respectivement un circuit interrupteur 22-1 à 22-N. Le premier 22-1 de ces circuits est détaillé; il comporte un montage photocoupleur groupant une résistance R en série avec une diode photoémettrice D1 et un phototransistor T1 jouant le rôle d'interrupteur sur le circuit d'alimentation de l'élément 11-1 concerné. Ce montage permet d'isoler le circuit logique de la haute tension continue Vcc d'alimentation des éléments PLZT. L'alimentation d'un élément 11-J par fermeture du circuit interrupteur correspondant rend cet élément transparent.

Le fonctionnement est illustré à l'aide de la figure 9 où sont représentés en correspondance les éléments 1 à N de l'obturateur 11 et les valeurs J et $\theta$. L'angle $\theta$ peut varier entre une valeur minimale $\theta_m$ et une valeur maximale $\theta_M$. Pour $\theta$ compris entre $\theta_m$ et une première valeur $\theta_1$, le calculateur 5 élabore une donnée SJ correspondant à la sortie décodée JO et le premier élément 11-1 est transparent. Pour la plage suivant de site $\theta 1$ à $\theta 2$ le calculateur délivre la donnée SJ correspondant à J1 et les deux éléments 11-1, 11-2 sont rendus transparents, et ainsi de suite. Les sorties J1 à JN-1 correspondent à deux éléments transparents, les sorties extrêmes JO et JN à un seul élément transparent ($\theta < \theta 1$ et $\theta > \theta_N$). La plage de site $\Delta\theta$ correspond à celle produite par un élément 11-J en assimilant la distribution angulaire à une distribution régulière, ce qui peut être envisagé pour une plage totale $\theta_m$ à $\theta_M$ assez limitée, par exemple inférieure à 30°; et un nombre $N$ d'éléments obturateurs suffisamment élevé. Le paramètre $\theta\Delta$ peut également être prédéterminé variable, pour correspondre précisément à chaque fois à la plage angulaire correspondante allant du milieu d'un élément 11-J au milieu de l'élément 11-(J+1) suivant.

Pour l'acquisition de la source, à l'instant initial de fonctionnement, le dispositif obturateur 3 est rendu totalement transparent pour bénéficier du champ total du capteur résultant de chaque groupement d'une barrette détectrice 2 avec la fente 1 associée. Ceci peut être obtenu par un codage initial des sorties SJ tel que les sorties J1 à JN-1 sont égales à 1 ce qui entraîne l'alimentation de tous les éléments PLZT 11-1 à 11-N. Dès la localisation de la source par le calcul, les données SJ traduisent la valeur $\theta$ et le système fonctionne en poursuite automatique.

Les dispositifs obturateurs optoélectriques 3 peuvent être réalisés d'autre manière qu'en utilisant des céramiques PLZT, par exemple à l'aide de cristaux liquides.

Les signaux SK1, SK2 à l'entrée du circuit de calcul 5 de la figure 1 représentent les informations de range provenant d'autres groupements de barrette et de fente faisant partie du capteur lequel comporte au moins deux groupements. Les signaux SJ1 et SJ2 représentent les signaux de commande des dispositifs obturateurs correspondants aux autres groupements.

Il est entendu que les perfectionnements décrits ne sont pas restreints au type de capteur considéré dans lequel une fente linéaire est associée à une barrette détectrice de direction perpendiculaire. Ces perfectionnements sont transposables et applicables à d'autres types de capteurs ayant des fentes de forme différente, par exemple des capteurs comportant plusieurs fentes associées à une barrette.

Le dispositif de localisation conforme à l'invention présente plusieurs avantage. Le signal utilisé n'est pas altéré étant donné que la partie optiquement intéressante pour l'illumination du détecteur est le champ défini par la partie transparente du cache optique et la source, ce champ aboutissant sensiblement sur la zone EK du récepteur. En présence d'un fond lumineux intense, le signal parasite dû au fond est notablement réduit dans le rapport des surfaces de la fente et de la partie transparente sélectionnée; pour un obturateur à N éléments le gain peut atteindre N. L'angle solide dans lequel peuvent se situer des sources ponctuelles ou quasi-ponctuelles parasites est réduit approximativement dans le même rapport. De plus, comme la source S1 (ou le groupement de source) peut être supporté par une structure matérielle 30, un casque de pilote par exemple comme représenté sur la figure 10, cette structure peut occulter une partie importante du champ extérieur à travers lequel le rayonnement solaire pourrait parvenir sur le récepteur photosensible; en particulier, la structure 30 occulte la totalité du champ extérieur aboutissant à l'élément (ou la zone d'éléments) EK dans l'exemple figuré. Ainsi la probabilité de détection direct du rayonnement solaire est fortement atténuée.

En fait, le dispositif obturateur introduit à l'état transparent une atténuation optique, ceci n'est pas gênant dans le cas de détecteurs en circuits CCD qui présentent une sensibilité très élevée et compte tenu que cette atténuation joue aussi bien pour le signal utile que pour les signaux parasites.

## Revendications

1. Dispositif optoélectrique de localisation de source lumineuse ponctuelle $(S_1)$ comportant; un cache optique pour ne laisser pénétrer le rayonnement de la source que selon des zones transparentes (1) de forme déterminée; un montage de réseaux linéaires (2) d'éléments photosensibles disposés dans un plan parallèle au cache; des circuits de traitement (4) des signaux détectés par les réseaux identifiant le rang des éléments sensibilisés par le rayonnement transmis à travers le cache; des moyens annexes (5) de calcul de localisation de la source à partir des identifications de rang, caractérisé en ce que des moyens obturateurs optoélectriques (3) sont prévus pour opacifier les zones transparentes (1) du cache exceptées les régions qui transmettent le rayonnement lumineux issu de la source (S1) sur les réseaux détecteurs (2), ces moyens comportant une pluralité d'éléments obturateurs optiques à commande électrique (11-1 à 11-N) et des moyens de sélection (6) des éléments obturateurs correspondants auxdites régions, à partir de signaux de commande (SJ) élaborés par les moyens de calcul (5) en fonction de la localisation angulaire ($\Delta, \theta$) présentée par la source.

2. Dispositif selon la revendication 1, caractérisé en ce que les éléments obturateurs optoélectriques sont juxtaposés selon la direction des zones transparentes du cache (1) en sorte de permettre sensiblement l'occultation de n'importe quelle région de ces zones.

3. Dispositif selon la revendication 2, caractérisé en ce que les moyens obturateurs optoélectriques sont du type utilisant une lame en céramique ferroélectrique.

4. Dispositif selon la revendication 3, caractérisé en ce qu'une pluralité N d'éléments obturateurs (11-1 à 11-N) est obtenue par duplication de circuits d'électrodes interdigitées (12-J) sur une lame céramique (11) disposée entre deux polariseurs (10, 13) et recouvrant l'aire d'une zone transparente associée (1), en sorte de permettre par commande sélective d'alimentation des électrodes à partir d'un circuit de commande associée (6), de rendre transparent une ou plusieurs quelconques des N éléments correspondantes du dispositif obturateur ainsi constitué.

5. Dispositif selon la revendication 4, dans lequel les zones transparentes sont constituées de fentes (1) associées respectivement à une barrette photodétectrice (2), caractérisé en ce que chaque fente (1) est équipée d'un dispositif obturateur (3) à N régions juxtaposées, commandé électriquement par le circuit de commande associé (6) à partir de signaux (SJ) représentatifs du positionnement angulaire de la source (S1) élaborés par le calculateur annexe (5).

6. Dispositif selon la revendication 4 ou 5, caractérisé en ce que le circuit de commande associé (6) commande à la fois l'alimentation de deux circuits d'électrodes interdigitées correspondant à deux éléments successifs de l'obturateur.

7. Dispositif selon l'une quelconque des revendications 4 à 6, caractérisé en ce que le circuit de commande (6) comporte un circuit de décodage (20) des signaux de localisation (SJ) connecté par des sorties à un réseau de circuits portes logiques (21-1 à N) suivis de circuts interrupteurs (22-1 à N) respectivement associés aux éléments obturateurs, chaque circuit d'électrodes interdigitées étant connecté à un circuit interrupteur et à une alimentation continue (Vcc).

8. Dispositif selon la revendication 7, caractérisé en ce que chaque circuit interrupteur (22-J) comporte un phototransistor (T1) couplé optiquement à une diode photoémettrice (D1) alimentée par la sorite d'un circuit porte.

**Patentansprüche**

1. Elektrooptische Vorrichtung zur Lokalisierung von punktförmigen Lichtquellen (S1), die folgende Elemente aufweist: eine optische Maske, um die Strahlung der Quelle nur durch durchsichtige Bereiche (1) bestimmter Form einzulassen; eine Montage von in einer zur Maske parallelen Ebene liegenden linearen Gittern (2) von lichtempfindlichen Elementen; Stromkreise (4) zur Verarbeitung der Signale, die von denjenigen Gittern abgetastet werden, welche den Rang derjenigen Elemente identifizieren, die durch die die Maske eingelasse Strahlung angesprochen werden; zugeordnete Rechenmittel (5) zur Lokalisierung der Quelle anhand der Rangidentifikatoren, dadurch gekennzeichnet, dass elektrooptische Abblendmittel (3) zum Undurchsichtigmachen der durchsichtigen Bereiche (1) der Maske mit Ausnahme der Zonen, die die von der Quelle (S1) kommende Lichtstrahlung auf die Abtastgitter (2) durchlassen, vorgesehen sind, wobei diese Abblendmittel eine Mehrzahl von elektrisch gesteuerten Abblendelementen (11-1 bis 11-N) sowie Wahlmittel (6) zum Wählen der den genannten Zonen entsprechenden Abdeckelementen, unter Zugrundelegung von Steuersignalen (SJ) aufweisen, die durch die Rechenmittel (5) in Abhängigkeit von dem Winkellokalisationswertz (Δ, θ) der Quelle erarbeitet werden.

2. Vorrichtung nach Anspruch 1, dadurch gekennzeichnet, dass die elektrooptischen Abblendelemente in Richtung der durchsichtigen Bereiche der Maske (1) nebeneinander angeordnet sind, derart, dass sie es im wesentlichen ermöglichen, eine beliebige Zone dieser Bereiche abzudecken.

3. Vorrichtung nach Anspruch 2, dadurch gekennzeichnet, dass die elektrooptischen Abblendmittel eine ferroelektrische Keramikplatte aufweisen.

4. Vorrichtung nach Anspruch 3, dadurch gekennzeichnet, dass eine Mehrzahl N von Abblendelementen (11-1 bis 11-N) gebildet wird durch Verdoppelung von ineinander eingreifende Elektroden aufweisenden Stromkreisen (12-J) auf einer zwischen zwei Polarisatoren (10, 13) angeordneten Keramikplatte (11), welche die Fläche einer zugehörigen durchsichtigen Zone (1) überdeckt, so dass durch selektives Speisen der Elektroden vermittels eines zugeordneten Steuerstromkreises (6) ein oder mehrere beliebige der N entsprechenden Elemente der somit gebildeten Abblendvorrichtung durchsichtig gemacht werden können.

5. Vorrichtung nach Anspruch 4, in der die durchsichtigen Zonen aus je einen lichtempfindlichen Stäbchen (2) zugeordneten Spalten (1) bestehen, dadurch gekennzeichnet, dass jeder Spalt mit einer Abblendeinrichtung (3) mit N nebeneinander angeordneten Zonen ausgestattet ist, wobei diese Einrichtung durch den zugeordneten Steuerstromkreis (6) mit Hilfe der die Winkelstellung der Quelle (S1) darstellenden, durch den zugeordneten Rechner (5) erzeugten Signale (SJ) elektrisch gesteuert wird.

6. Vorrichtung nach Anspruch 4 oder 5, dadurch gekennzeichnet, dass der zugeordnete Steuerstromkreis (6) zugleich die Speisung zweier ineinander eingreifende Elektroden aufweisender Stromkreise steuer, die zwei nacheinander angeordneten Elementen der Abblendvorrichtung entsprechen.

7. Vorrichtung nach einem der Ansprüche 4 bis 6, dadurch gekennzeichnet, dass der Steuerstromkreis (6) einen Entschlüssungsstromkreis (20) zum Entschlüsseln der Lokalisationssignale (SJ) aufweist, welcher über Ausgänge mit einem Netz logischer Gatter (21-1 bis N) verbunden ist, denen jeweils mit Abdeckelementen zusammenwirkende Unterbrecher stromkreise (22-1 bis N) nachgeschaltet sind, wobei jeder ineinandergreifende Elektroden aufweisende Stromkreis an einen Unterbrecherstromkreis und eine Gleichstromquelle (Vcc) angeschlossen ist.

8. Vorrichtung nach Anspruch 7, dadurch gekennzeichnet, dass jeder Unterbrecherstromkreis (22-J) einen Fototransistor (T1) aufweist, welcher mit einer durch den Ausgang eines Gatterkreises gesteuerten Fotodiode (D1) optisch gekoppelt ist.

**Claims**

1. Optoelectronic device for locating a pinpoint light source (S₁), comprising an optical mask to let pass the radiation of the source T only through transparent areas (1) of determined shape, an assembly of linear arrays (2) of photosensitive elements arranged within a plane parallel to the mask, circuits (4) for processing signals sensed by the arrays and identifying the rank of the elements activated by the radiation transmitted through the mask, associated to computing means (5) for locating the source by means of rank identifications, characterized in that optochemical shutter means (3) are used to make opaque the transparent areas (1) of the mask except regions which pass on the light rays from the source (S₁) to the sensing arrays (2), these means comprising a plurality of optical shutter elements (11-1 to 11-N) electrically controlled and means (6) for selecting the shutter elements associated to these regions, from control signals (SJ) generated by the computing means (5) as a function of the angular location ($\Delta, \theta$) of the source.

2. Device according to claim 1, characterized in that the optoelectronic shutter elements are juxtaposed along the direction of the transparent areas of mask (1) so as to substantially occult any region of these areas.

3. Device according to claim 2, characterized in that the optoelectronic shutter means are of the kind in which a ferroelectric ceramic strip is used.

4. Device according to claim 3, characterized in that a plurality of N shutter elements (11-1 to 11-N) is obtained by duplicating interdigitized electrode circuits (12-J) on a ceramic strip (11) arranged between two polarizers (10, 13) and covering the surfaces of an associated transparent area (1), so as to make transparent one or more of any N corresponding elements of the shutter device so obtained, by selectively controlling the feeding of the electrodes by an associated control circuit (6).

5. Device according to claim 4, characterized in that the transparent area are slits (1) respectively associated with a photosensitive strip (2), characterized in that each slit (1) is associated with a shutter device (3) comprising N juxtaposed regions, electrically controlled by the associated control circuit (6) from signals (SJ) representative of the angular location of source (S1) and generated by the associated computer (5).

6. Device according to claim 4 or 5, characterized in that the associated control circuit (6) controls the feeding of both the two interdigitized electrode circuits corresponding to two successive shutter elements.

7. Device according to any one of claims 4 to 6, characterized in that the control circuit (6) comprises a circuit (20) for decoding locating signals (SJ) the outputs of which are connected to an array of logic gate circuits (21-1 to N) in line with switching circuits (22-1 to N) respectively associated to the shutter elements, each digitized electrode circuit being connected to a switching circuit and to a D.C. supply (V_cc).

8. Device according to claim 7, characterized in that each switching circuit (22-J) comprises a phototransistor (T1) optically coupled to a photoemissive diode (D1) fed by the output of a gate circuit.

# FIG_1

P1

3

S1

P2

2

EK

1

Z    Δ

θ

Y    X

O

| Circuit de traitement | 4 |
| 5 |
| Calculateur |

SK

SK1

SK2

| Circuit de commande | 6 |

SJ

SJ1

SJ2

# FIG_1□

30

S1

3

2

EK

# FIG_2    FIG_3    FIG_4

# FIG_5    FIG_6

# FIG_7

FIG_8

FIG_9

3